# EUROPÄISCHE PATENTSCHRIFT

(11) **EP 3 880 389 B1**
(45) Veröffentlichungstag und Bekanntmachung des Hinweises auf die Patenterteilung: **28.08.2024**
(21) Anmeldenummer: 19798631.8
(22) Anmeldetag: 06.11.2019
(51) Int. Cl.: B22F 10/73, B22F 12/50, B22F 12/67, B33Y 10/00, B33Y 30/00, B33Y 40/00, B29C 64/214, B22F 10/28, B22F 10/32, B22F 10/77, B22F 12/70

(54) **PULVERAUFTRAGSVORRICHTUNG, VERFAHREN ZUM BETREIBEN EINER PULVERAUFTRAGSVORRICHTUNG UND ANLAGE ZUR HERSTELLUNG EINES DREIDIMENSIONALEN WERKSTÜCKS**
POWDER APPLICATION DEVICE, METHOD FOR OPERATING A POWDER APPLICATION DEVICE, AND SYSTEM FOR PRODUCING A THREE-DIMENSIONAL WORKPIECE
DISPOSITIF D'APPLICATION DE POUDRE, PROCÉDÉ DE FONCTIONNEMENT D'UN DISPOSITIF D'APPLICATION DE POUDRE ET INSTALLATION DE FABRICATION D'UNE PIÈCE TRIDIMENSIONNELLE

(30) Priorität: 12.11.2018 DE 102018128242
(43) Veröffentlichungstag der Anmeldung: 22.09.2021
(73) Patentinhaber: Nikon SLM Solutions AG, 23560 Lübeck (DE)
(72) Erfinder: KOERNER, Peter, 23560 Lübeck (DE); FRANK, Ralf, 23560 Lübeck (DE)
(74) Vertreter: Schicker, Silvia
(86) Internationale Anmeldenummer: PCT/EP2019/080384
(87) Internationale Veröffentlichungsnummer: WO 2020/099211

(56) Entgegenhaltungen:
- EP-A1- 3 391 981
- WO-A1-2018/029059
- DE-A1- 102012 200 161

## Beschreibung

Die Erfindung betrifft eine Pulverauftragsvorrichtung zur Verwendung in einer Anlage zur Herstellung eines dreidimensionalen Werkstücks mithilfe eines generativen Schichtbauverfahrens. Ferner betrifft die Erfindung ein Verfahren zum Betreiben einer derartigen Pulverauftragsvorrichtung. Schließlich betrifft die Erfindung eine mit einer derartigen Pulverauftragsvorrichtung ausgestattete Anlage zur Herstellung eines dreidimensionalen Werkstücks mithilfe eines generativen Schichtbauverfahrens.

Bei generativen Verfahren zur Herstellung dreidimensionaler Werkstücke und insbesondere bei generativen Schichtbauverfahren ist es bekannt, ein Rohstoffpulver schichtweise auf einen Träger aufzutragen und durch ortsspezifisches Bestrahlen z. B. durch Verschmelzen oder Versintern zu verfestigen, um letztendlich ein Werkstück einer gewünschten Form zu erhalten. Das Bestrahlen kann mittels elektromagnetischer Strahlung, insbesondere Laserstrahlung, oder Teilchenstrahlung erfolgen. Ist eine Werkstückschicht verfestigt, wird eine neue Schicht aus unverarbeitetem Rohstoffpulvermaterial auf die bereits hergestellte Werkstückschicht aufgebracht. Hierzu können bekannte Beschichteranordnungen oder Pulverauftragsvorrichtungen verwendet werden. Anschließend erfolgt eine erneute Bestrahlung der nun obersten und noch unverarbeiteten Rohstoffpulverschicht. Folglich wird das Werkstück sukzessive Schicht für Schicht aufgebaut, wobei jede Schicht eine Querschnittsfläche und/oder eine Kontur des Werkstücks definiert. In diesem Zusammenhang ist es ferner bekannt, auf CAD- oder vergleichbare Werkstückdaten zurückzugreifen, um die Werkstücke im Wesentlichen automatisch herzustellen.

Bekannte Vorrichtungen zur Herstellung von dreidimensionalen Werkstücken finden sich beispielsweise in der EP 2 961 549 A1 und in der EP 2 878 402 A1. Die in diesen Dokumenten beschriebenen Vorrichtungen umfassen jeweils einen Träger, welcher Schicht für Schicht in vertikale Richtung nach unten abgesenkt werden kann. Eine entsprechende vertikale Bewegung des Trägers findet in diesen bekannten Vorrichtungen immer dann statt, wenn eine Schicht des Rohstoffpulvers vollständig bestrahlt wurde und bevor die nächste Pulverschicht aufgetragen wird. Somit kann gewährleistet werden, dass sich eine Fokalebene der Bestrahlungseinheit immer in der zu verfestigen Schicht (d. h. in der obersten Schicht) des Rohstoffpulvers befindet. Ferner umfassen diese Vorrichtungen eine mit einem Gaskreislauf verbundene Prozesskammer. Über einen Gaseinlass kann der Prozesskammer ein Gas, insbesondere ein Schutzgas zugeführt werden. Nach dem Durchströmen der Prozesskammer wird das Gas über einen Gasauslass aus der Prozesskammer abgeführt.

Zum Auftragen des Rohstoffpulvers auf den Träger wird üblicherweise eine Pulverauftragsvorrichtung verwendet. Die Pulverauftragsvorrichtung umfasst ein über die Oberfläche des Trägers bewegbares Verteilelement, das über die Oberfläche des Trägers oder eine bereits auf die Oberfläche des Trägers aufgetragene und zumindest teilweise verfestigte Pulverschicht fährt und dabei eine neue Pulverschicht aufträgt. Das Verteilelement kann eine Walze, einen Schieber oder ein anderes Bauteil, das dazu geeignet ist, das Rohstoffpulver auf den Träger aufzutragen und zu verteilen, umfassen. Das aufzutragende Pulver kann einem Pulverreservoir entnommen werden, das integriert mit dem über die Oberfläche des Trägers bewegbaren Verteilelement der Pulverauftragsvorrichtung ausgebildet ist. Alternativ dazu kann die Pulverauftragsvorrichtung jedoch auch ein ortsfestes Pulverreservoir umfassen, das beispielsweise benachbart zu dem Träger angeordnet ist und von dem das über den Träger bewegbare Verteilelement Pulver entnimmt und über die Oberfläche des Trägers verteilt. Zum Einsatz in einer Anlage zur Herstellung eines dreidimensionalen Werkstücks mithilfe eines generativen Schichtbauverfahrens geeignete Pulverauftragsvorrichtungen sind beispielsweise in der EP 2 818 305 B1 oder der WO 2018/029059 A1 beschrieben.

CN 107 303 608 A offenbart eine Pulverauftragsvorrichtung für ein generatives Schichtaufbauverfahren. Eine neue ebene Pulverschicht wird erstellt, indem ein Pulververteiler in einer Richtung parallel zur zu erzeugenden neuen Pulverschicht bewegt und in Bahnen angehäuftes Pulver für die neue Pulverschicht verteilt wird. Dazu ist der Pulververteiler an einer vorderen Seite kammähnlich mit Zinken ausgebildet und ein Zinken durchteilt einen oberen Teile einer Bahn mit angehäuftem Pulver, sodass das Pulver für die neue Schicht in Furchen zwischen den Bahnen verlagert wird und somit eine ebene Pulverschicht entsteht. Überschüssiges Material einer Bahn mit angehäuftem Pulver, das nicht in den Furchen aufgenommen werden kann, wird auf einer Oberseite des Pulververteilers abtransportiert.

EP3391981 A1 offenbart eine Pulverauftragsvorrichtung zur Verwendung in einer Anlage zur Herstellung eines dreidimensionalen Werkstücks mithilfe eines generativen Schichtbauverfahrens, wobei die Pulverauftragsvorrichtung ein Verteilelement umfasst, das über eine Oberfläche eines Trägers bewegbar ist, um ein Rohstoffpulver zur Herstellung eines Werkstücks durch ein generatives Schichtbauverfahren auf die Oberfläche des Trägers aufzubringen, und einen über eine Trägerebene bewegbaren Pulvermitnehmer, der im Bereich einer der Trägerebene zugewandten Oberfläche mit einem Oberflächenprofil versehen ist.

Aufgabe der Erfindung ist es, eine Pulverauftragsvorrichtung bereitzustellen, die zur Verwendung in einer Anlage zur Herstellung eines dreidimensionalen Werkstücks mithilfe eines generativen Schichtbauverfahrens geeignet ist und die eine effiziente Herstellung qualitativ hochwertiger Werkstücke erleichtert. Ferner liegt der Erfindung die Aufgabe zugrunde, ein Verfahren zum Betreiben einer Pulverauftragsvorrichtung bereitzustellen, die zur Verwendung in einer Anlage zur Herstellung eines dreidimensionalen Werkstücks mithilfe eines generativen Schichtbauverfahrens geeignet ist und die eine effiziente Herstellung qualitativ hochwertiger Werkstücke erleichtert. Schließlich ist die Erfindung auf die Aufgabe gerichtet, eine mit einer derartigen Pulverauftragsvorrichtung ausgestattete Anlage zur Herstellung eines dreidimensionalen Werkstücks mithilfe eines generativen Schichtbauverfahrens anzugeben.

Diese Aufgabe wird durch eine Pulverauftragsvorrichtung mit den Merkmalen des Patentanspruchs 1, ein Verfahren zum Betreiben einer Pulverauftragsvorrichtung mit den Merkmalen des Patentanspruchs 11 sowie eine Anlage zur Herstellung eines dreidimensionalen Werkstücks mit den Merkmalen des Patentanspruchs 13 gelöst.

Eine Pulverauftragsvorrichtung zur Verwendung in einer Anlage zur Herstellung eines dreidimensionalen Werkstücks mithilfe eines generativen Schichtbauverfahrens ein Verteilelement, das über eine Oberfläche eines Trägers bewegbar ist, um ein Rohstoffpulver zur Herstellung eines Werkstücks durch ein generatives Schichtbauverfahren auf die Oberfläche des Trägers aufzubringen. Der Träger kann eine horizontale Oberfläche aufweisen, auf welche das Rohstoffpulver schichtweise, d. h. in horizontalen Schichten, aufgetragen werden kann. Ferner kann der Träger dazu eingerichtet sein, Schicht für Schicht in vertikaler Richtung nach unten abgesenkt zu werden.

Ein Pulverreservoir kann integriert mit dem über die Oberfläche des Trägers bewegbaren Verteilelement der Pulverauftragsvorrichtung ausgebildet sein und sich im Betrieb der Pulverauftragsvorrichtung ebenfalls über die Oberfläche des Trägers bewegen. Durch entsprechende Steuerung der Pulverabgabe aus dem Pulverreservoir kann dann eine gewünschte Menge des Rohstoffpulvers während der Bewegung des Verteilelements über die Oberfläche des Trägers auf den Träger aufgetragen werden. Alternativ dazu kann die Pulverauftragsvorrichtung jedoch auch ein ortsfestes Pulverreservoir umfassen, das beispielsweise benachbart zu dem Träger angeordnet ist und von dem das Verteilelement der Pulverauftragsvorrichtung Pulver entnimmt und über die Oberfläche des Trägers verteilt.

Bei dem auf den Träger aufzubringen Rohstoffpulver kann es sich beispielsweise um ein metallisches oder keramisches Rohstoffpulver handeln. Das Rohstoffpulver kann in Abhängigkeit der gewünschten Eigenschaften des zu fertigenden Werkstücks unterschiedliche Partikelgrößen und Partikelgrößenverteilungen haben. Vorzugsweise liegt die Partikelgröße des Rohstoffpulvers jedoch unter 100 µm.

Ferner umfasst die Pulverauftragsvorrichtung einen über eine Trägerebene bewegbaren Pulvermitnehmer. Bei der Trägerebene handelt es sich um eine Ebene, die sich parallel zu der Oberfläche des Trägers erstreckt und zumindest in bestimmten Betriebszuständen des Trägers, beispielsweise dann, wenn sich der Träger in seiner maximal angehobenen Position befindet, auch koplanar zu der Oberfläche des Trägers angeordnet und zumindest zum Teil durch die Oberfläche des Trägers definiert sein kann. Zusätzlich oder alternativ dazu kann die Trägerebene durch einen zu dem Träger benachbarten Bereich einer Bodenplatte einer Prozesskammer der Anlage zur Herstellung eines Werkstücks durch ein generatives Schichtbauverfahren definiert werden.

Der Pulvermitnehmer ist im Bereich einer der Trägerebene zugewandten Oberfläche mit einem Oberflächenprofil versehen, das ein Mitnahmeelement sowie einen Durchlasskanal umfasst. Das Mitnahmeelement und der Durchlasskanal sind so geformt und angeordnet, dass bezogen auf die Bewegung des Pulvermitnehmers über die Trägerebene vor dem Pulvermitnehmer auf der Trägerebene abgelagertes pulverförmiges Material bei einer Bewegung des Pulvermitnehmers über die Trägerebene in einer ersten Bewegungsrichtung von dem Mitnahmeelement mitgenommen wird. Bei einer Bewegung des Pulvermitnehmers über die Trägerebene in einer der ersten Bewegungsrichtung entgegengesetzten zweiten Bewegungsrichtung wird das auf der Trägerebene abgelagerte pulverförmige Material dagegen durch den Durchlasskanal geleitet.

Der Pulvermitnehmer ist demnach dazu in der Lage, bezogen auf die Bewegung des Pulvermitnehmers über die Trägerebene vor dem Pulvermitnehmer auf der Trägerebene abgelagertes pulverförmiges Material mitzunehmen und über die Trägerebene zu schieben, wenn er sich in der ersten Bewegungsrichtung über die Oberfläche des Trägers bewegt. Im Gegensatz dazu bleibt bezogen auf die Bewegung des Pulvermitnehmers über die Trägerebene vor dem Pulvermitnehmer auf der Trägerebene abgelagertes pulverförmiges Material im Wesentlichen an seiner ursprünglichen Position, wenn sich der Pulvermitnehmer in der zweiten Bewegungsrichtung über die Oberfläche des Trägers bewegt. Der Pulvermitnehmer kann somit dazu eingesetzt werden, pulverförmige Material, das sich in einem Bereich der Trägerebene auf der Trägerebene ansammelt, durch eine Verschiebung des Pulvermitnehmers in der ersten Bewegungsrichtung aus diesem Bereich zu entfernen. Gleichzeitig wird verhindert, dass der Pulvermitnehmer bei einer Verschiebung in der zweiten Bewegungsrichtung pulverförmiges Material in diesen Bereich der Trägerebene transportiert.

Im Betrieb einer Anlage zur Herstellung eines dreidimensionalen Werkstücks durch ein generatives Schichtbauverfahren kann sich in einem zu einem Gasauslass der Prozesskammer benachbarten Bereich der Trägerebene von einem durch die Prozesskammer geführten Gasstrom mitgenommenes Pulver und/oder Kondensat ablagern. Dieses Pulver und/oder Kondensat kann mittels des Pulvermitnehmers durch eine Bewegung des Pulvermitnehmers in der ersten Bewegungsrichtung aus dem Bereich der Trägerebene abtransportiert und beispielsweise in einen Auffangschacht gefördert werden. Gleichzeitig wird durch das Design des Oberflächenprofils des Pulvermitnehmers verhindert, dass bei einer Verschiebung des Pulvermitnehmers in der zweiten Bewegungsrichtung in unerwünschter Weise Pulver- und/oder Kondensatpartikel in den zu dem Gasauslass benachbarten Bereich der Trägerebene befördert werden.

Dadurch wird verhindert, dass die Gasströmung durch den Gasauslass durch die Ansammlung von Pulver und/oder Kondensat auf der Trägerebene im Bereich des Gasauslasses behindert wird. Ferner wird die Verunreinigung des über den Gasauslass aus der Prozesskammer geleiteten Gasstroms durch im Bereich des Gasauslasses angesammelte Pulver- und/oder Kondensatpartikel minimiert. Ein Gasfilter, der in einer mit dem Gasauslass verbundenen Gasabfuhrleitung angeordnet ist und dazu dient, partikelförmige Verunreinigungen aus dem durch die Gasabfuhrleitung strömenden Gasstrom zu filtern, wird dadurch vor einer vorzeitigen Verstopfung geschützt. Die Pulverauftragsvorrichtung erleichtert folglich die effiziente Herstellung eines qualitativ hochwertigen dreidimensionalen Werkstücks durch ein generatives Schichtbauverfahren.

Grundsätzlich können das Verteilelement und der Pulvermitnehmer separat voneinander ausgebildet und separat und unabhängig voneinander über die Oberfläche des Trägers bzw. die Trägerebene bewegbar sein. Vorzugsweise ist der Pulvermitnehmer jedoch an dem Verteilelement befestigt und wird somit im Betrieb der Pulverauftragsvorrichtung gemeinsam mit dem Verteilelement bewegt. Beispielsweise kann sich der Pulvermitnehmer in einer zu der ersten und der zweiten Bewegungsrichtung des Pulvermitnehmers über die Trägerebene im Wesentlichen senkrechten Richtung von einer Seitenfläche des Verteilelements erstrecken. Bei der gemeinsamen Bewegung des Verteilelements und des Pulvermitnehmers überstreicht der Pulvermitnehmer dann einen Bereich der Trägerebene, der in der zu der ersten und der zweiten Bewegungsrichtung des Pulvermitnehmers über die Trägerebene im Wesentlichen senkrechten Richtung benachbart zu dem Träger angeordnet ist.

Das Oberflächenprofil kann eine Mehrzahl von Mitnahmeelementen sowie eine Mehrzahl von zwischen den Mitnahmeelementen angeordneten Durchlasskanälen umfassen. Alternativ dazu kann auch ein Mitnahmeelement so gestaltet sein, dass es durch seine Form eine Mehrzahl von Durchlasskanälen definiert. Zumindest ein Teil der Mitnahmeelemente des an dem Pulvermitnehmer vorgesehenen Oberflächenprofils kann im Bereich eines bezogen auf die Bewegung des Pulvermitnehmers über die Trägerebene in der zweiten Bewegungsrichtung vorderen Endes spitz zulaufend ausgebildet sein. Unter "spitz zulaufend" kann hier auch eine Ausbildung der Enden der Mitnahmeelemente mit einem minimalen Radius verstanden werden. Ein derartiges Design der Mitnahmeelemente sorgt dafür, dass pulverförmiges Material, das bezogen auf die Bewegung des Pulvermitnehmers über die Trägerebene in der zweiten Bewegungsrichtung vor dem Pulvermitnehmer auf der Trägerebene abgelagert ist, an den Mitnahmeelementen vorbei in die zwischen den Mitnahmeelementen vorhandenen Durchlasskanäle geleitet wird. Es versteht sich, dass das spitz zulaufend ausgebildete Ende der Mitnahmeelemente bei einer Bewegung des Pulvermitnehmers über die Trägerebene in der ersten Bewegungsrichtung ein hinteres Ende der Mitnahmeelemente bildet.

Im Gegensatz dazu kann zumindest ein Teil der Mitnahmeelemente im Bereich eines bezogen auf die Bewegung des Pulvermitnehmers über die Trägerebene in der ersten Bewegungsrichtung vorderen Endes mit einem Pulverauffangabschnitt versehen sein. Dadurch wird pulverförmiges Material, das bezogen auf die Bewegung des Pulvermitnehmers über die Trägerebene in der ersten Bewegungsrichtung vor dem Pulvermitnehmer auf der Trägerebene abgelagert ist, von den Mitnahmeelementen aufgefangen und mitgenommen. Es versteht sich, dass das mit einem Pulverauffangabschnitt versehene Ende der Mitnahmeelemente bei einer Bewegung des Pulvermitnehmers über die Trägerebene in der zweiten Bewegungsrichtung ein hinteres Ende der Mitnahmeelemente bildet.

Zumindest ein Teil der Mitnahmeelemente kann V-förmig, keilförmig und/oder hakenförmig ausgebildet sein. Die Mitnahmeelemente sind dann insbesondere so orientiert, dass ihr spitz zulaufendes Ende bezogen auf die Bewegungsrichtung des Pulvermitnehmers über die Trägerebene ein vorderes Ende bildet, wenn der Pulvermitnehmer in der zweiten Bewegungsrichtung über die Trägerebene bewegt wird. Dadurch wird, wie oben beschrieben, erreicht, dass bei einer Bewegung des Pulvermitnehmers über die Trägerebene in der zweiten Bewegungsrichtung auf der Trägerebene abgelagertes pulverförmiges Material ausgehend von den spitz zulaufenden Enden der Mitnahmeelemente und entlang von Außenflächen der Mitnahmeelemente, in die zwischen den Mitnahmeelementen vorhandenen Durchlasskanäle geleitet wird. Ein Durchlassquerschnitt der von den Außenflächen der Mitnahmeelemente begrenzten Durchlasskanäle verringert sich vorzugsweise in der zweiten Bewegungsrichtung des Pulvermitnehmers über die Trägerebene. In einer besonders einfachen Ausgestaltungsform ist zumindest ein Teil der Mitnahmeelemente in Form einer Gerade ausgebildet.

Gleichzeitig sind die Mitnahmeelemente insbesondere so orientiert, dass ihr mit einem Pulverauffangabschnitt versehenes Ende bezogen auf die Bewegungsrichtung des Pulvermitnehmers über die Trägerebene ein vorderes Ende bildet, wenn der Pulvermitnehmer in der ersten Bewegungsrichtung über die Trägerebene bewegt wird. Dadurch wird, wie oben beschrieben erreicht, dass bei einer Bewegung des Pulvermitnehmers über die Trägerebene in der ersten Bewegungsrichtung auf der Trägerebene abgelagertes pulverförmige Material von den Pulverauffangabschnitten der Mitnahmeelemente aufgefangen und mitgenommen wird.

In einer bevorzugten Ausführungsform der Pulverauftragsvorrichtung umfasst das Oberflächenprofil des Pulvermitnehmers eine erste Gruppe von Mitnahmeelementen, die in der zu der ersten und der zweiten Bewegungsrichtung des Pulvermitnehmers über die Trägerebene im Wesentlichen senkrechten Richtung in einer Reihe nebeneinander angeordnet sind. Zwischen zueinander benachbarten Mitnahmeelementen der ersten Gruppe ist vorzugsweise jeweils ein Durchlasskanal vorhanden. Der Abstand zwischen zueinander benachbarten Mitnahmeelementen der ersten Gruppe bestimmt dann die Dimensionen der zwischen den Mitnahmeelementen definierten Durchlasskanäle und kann beispielsweise in Abhängigkeit der Partikelgröße, der Partikelgrößenverteilung und der Agglomerierungsneigung der auf der Trägerebene abgelagerten und in Abhängigkeit der Bewegungsrichtung des Pulvermitnehmers über die Trägerebene entweder mitzunehmenden oder durch die Durchlasskanäle zu leitenden und ggf. von dem Prozess in der Prozesskammer beeinflussten Pulverpartikel gewählt werden. Die Höhe der Mitnahmeelemente kann je nach Bedarf gewählt werden. Beispielsweise können die Mitnahmeelemente höher konstruiert werden, um mehr Pulver mitnehmen zu können, wenn der Pulvermitnehmer seltener, z.B. unabhängig von dem Verteilelement über die Trägerebene bewegt wird.

Ferner kann das Oberflächenprofil des Pulvermitnehmers eine zweite Gruppe von Mitnahmeelementen umfassen, die in der zu der ersten und der zweiten Bewegungsrichtung des Pulvermitnehmers über die Trägerebene im Wesentlichen senkrechten Richtung in einer Reihe nebeneinander angeordnet sind. Darüber hinaus sind die Mitnahmeelemente der zweiten Gruppe bezogen auf die erste Bewegungsrichtung des Pulvermitnehmers über die Trägerebene vorzugsweise hinter der ersten Gruppe von Mitnahmeelementen zumindest teilweise in den zwischen den Mitnahmeelementen der ersten Gruppe vorhandenen Durchlasskanälen angeordnet. Bei einer Bewegung des Pulvermitnehmers über die Trägerebene in der ersten Bewegungsrichtung treffen dann zunächst die Mitnahmeelemente der ersten Gruppe auf das auf der Trägerebene abgelagerte pulverförmige Material. Ein Teil des pulverförmigen Materials wird dann bereits von den Mitnahmeelementen der ersten Gruppe, d.h. insbesondere deren Pulverauffangabschnitten, aufgefangen und mitgenommen. Zunächst in die Durchlasskanäle zwischen den Mitnahmeelementen der ersten Gruppe eintretendes pulverförmiges Material trifft dagegen im weiteren Verlauf der Bewegung des Pulvermitnehmers über die Trägerebene in der ersten Bewegungsrichtung auf die Mitnahmeelemente der zweiten Gruppe.

Die Mitnahmeelemente der zweiten Gruppe sind vorzugsweise so geformt und angeordnet, dass sie bei einer Bewegung des Pulvermitnehmers über die Trägerebene in der ersten Bewegungsrichtung zwischen den Mitnahmeelementen der ersten Gruppe in die Durchlasskanäle eintretendes pulverförmiges Material auffangen und mitnehmen. Die Mitnahmeelemente der zweiten Gruppe, d.h. insbesondere deren Pulverauffangabschnitte, fangen dann das von den Mitnahmeelementen der ersten Gruppe nicht mitgenommene pulverförmige Material auf. Dadurch wird gewährleistet, dass auf der Trägerebene abgelagertes pulverförmiges Material bei einer Bewegung des Pulvermitnehmers über die Trägerebene in der ersten Bewegungsrichtung zumindest zu einem großen Teil mitgenommen wird.

Ferner sind die Mitnahmeelemente der zweiten Gruppe vorzugsweise so geformt und angeordnet, dass sie bei einer Bewegung des Pulvermitnehmers über die Trägerebene in der zweiten Bewegungsrichtung in die Durchlasskanäle eintretendes pulverförmiges Material durch die Durchlasskanäle leiten. Mit anderen Worten, die Mitnahmeelemente der zweiten Gruppe sind vorzugsweise so geformt und angeordnet, dass sie die Durchlasskanäle nicht verschließen, sondern bei einer Bewegung des Pulvermitnehmers über die Trägerebene in der zweiten Bewegungsrichtung das Hindurchtreten des pulverförmigen Materials durch die Durchlasskanäle erlauben.

Bezogen auf die zweite Bewegungsrichtung des Pulvermitnehmers über die Trägerebene können die Mitnahmeelemente der zweiten Gruppe vor den Mitnahmeelementen der ersten Gruppe angeordnet sein. Die Mitnahmeelemente der zweiten Gruppe treffen bei einer Bewegung des Pulvermitnehmers über die Trägerebene in der zweiten Bewegungsrichtung dann vor den Mitnahmeelementen der ersten Gruppe auf das auf der Trägerebene abgelagerte Material.

Alternativ dazu ist es jedoch auch möglich, das Oberflächenprofil des Pulvermitnehmers so zu gestalten, dass die Mitnahmeelemente der zweiten Gruppe bezogen auf die zweite Bewegungsrichtung des Pulvermitnehmers über die Trägerebene auf einer Höhe mit den Mitnahmeelementen der ersten Gruppe angeordnet sind. In diesem Fall treffen dann bei einer Bewegung des Pulvermitnehmers über die Trägerebene in der zweiten Bewegungsrichtung die Mitnahmeelemente der ersten und der zweiten Gruppe gleichzeitig auf das auf der Trägerebene abgelagerte pulverförmige Material, so dass das pulverförmige Material an den Mitnahmeelementen der zweiten Gruppe vorbei durch die zwischen den Mitnahmeelementen der ersten Gruppe vorgesehenen Durchlasskanäle geleitet wird.

In einer bevorzugten Ausführungsform der Pulverauftragsvorrichtung sind die Mitnahmeelemente der zweiten Gruppe in der zu der ersten und der zweiten Bewegungsrichtung des Pulvermitnehmers über die Trägerebene im Wesentlichen senkrechten Richtung versetzt zu den Mitnahmeelementen der ersten Gruppe angeordnet. Beispielsweise können insbesondere Mitnahmeelemente der zweiten Gruppe, die nicht nur bezogen auf die erste Bewegungsrichtung des Pulvermitnehmers über die Trägerebene, sondern auch bezogen auf die zweite Bewegungsrichtung des Pulvermitnehmers über die Trägerebene hinter den Mitnahmeelementen der ersten Gruppe angeordnet sind, in der zu der ersten und der zweiten Bewegungsrichtung im Wesentlichen senkrechten Richtung derart relativ zu den Mitnahmeelementen der ersten Gruppe versetzt angeordnet sein, dass in jedem zwischen zwei Mitnahmeelementen der ersten Gruppe vorhandenen Durchlasskanal ein Mitnahmeelement der zweiten Gruppe angeordnet ist.

Ferner kann das Oberflächenprofil des Pulvermitnehmers eine dritte Gruppe von Mitnahmeelementen umfassen. Die Mitnahmeelemente der dritten Gruppe können in der zu der ersten und der zweiten Bewegungsrichtung des Pulvermitnehmers über die Trägerebene im Wesentlichen senkrechten Richtung in einer Reihe nebeneinander angeordnet sein. Zusätzlich oder alternativ dazu können die Mitnahmeelemente der dritten Gruppe in der zu der ersten und der zweiten Bewegungsrichtung im Wesentlichen senkrechten Richtung versetzt zu den Mitnahmeelementen der ersten und/oder der zweiten Gruppe angeordnet sein. Die Mitnahmeelemente der dritten Gruppe können bezogen auf die erste Bewegungsrichtung des Pulvermitnehmers über die Trägerebene hinter der zweiten Gruppe von Mitnahmeelementen zumindest teilweise in zwischen den Mitnahmeelementen der zweiten Gruppe vorhandenen Durchlasskanälen angeordnet sein. Die Mitnahmeelemente der dritten Gruppe erfüllen dann bezüglich der Mitnahmeelemente der zweiten Gruppe die gleichen Funktionen, wie sie oben für die Mitnahmeelemente der zweiten Gruppe bezüglich der Mitnahmeelemente der ersten Gruppe beschrieben wurden. Falls gewünscht oder erforderlich, kann das Oberflächenprofil des Pulvermitnehmers beispielsweise in Abhängigkeit seiner Fläche auch noch weitere Gruppen von Mitnahmeelementen umfassen.

Die Mitnahmeelemente der ersten Gruppe, die Mitnahmeelemente der zweiten Gruppe und/oder die Mitnahmeelemente der dritten Gruppe können im Wesentlichen identisch geformt sein. Beispielsweise können alle Mitnahmeelemente im Wesentlichen hakenförmig ausgebildet und/oder gleich groß sein. Die Mitnahmeelemente der zweiten Gruppe ragen dann vorzugsweise lediglich teilweise in die zwischen den Mitnahmeelementen der ersten Gruppe vorhandenen Durchlasskanäle, während die Mitnahmeelemente der dritten Gruppe dann in ähnlicher Weise vorzugsweise lediglich teilweise in die zwischen den Mitnahmeelementen der zweiten Gruppe vorhandenen Durchlasskanäle ragen.

In einer alternativen Ausführungsform der Pulverauftragsvorrichtung sind die Mitnahmeelemente der zweiten Gruppe vollständig in den zwischen den Mitnahmeelementen der ersten Gruppe vorhandenen Durchlasskanälen angeordnet. Eine derartige Konfiguration der Mitnahmeelemente bietet sich beispielsweise für ein Oberflächenprofil an, bei dem die Mitnahmeelemente der zweiten Gruppe bezogen auf die zweite Bewegungsrichtung des Pulvermitnehmers über die Trägerebene auf einer Höhe mit den Mitnahmeelementen der ersten Gruppe angeordnet sind.

Die Mitnahmeelemente der ersten Gruppe und die Mitnahmeelemente der zweiten Gruppe können eine im Wesentlichen identische geometrische Grundform aufweisen. Beispielsweise können sowohl die Mitnahmeelemente der ersten Gruppe als auch die Mitnahmeelemente der zweiten Gruppe V-förmig oder keilförmig ausgeführt sein. Vorzugsweise sind die Mitnahmeelemente der zweiten Gruppe jedoch kleiner als die Mitnahmeelemente der ersten Gruppe.

Bei einem Verfahren zum Betreiben einer Pulverauftragsvorrichtung, die zur Verwendung in einer Anlage zur Herstellung eines dreidimensionalen Werkstücks mithilfe eines generativen Schichtbauverfahrens geeignet ist, wird ein Verteilelement über eine Oberfläche eines Trägers bewegt, um ein Rohstoffpulver zur Herstellung eines Werkstücks durch ein generatives Schichtbauverfahren auf die Oberfläche des Trägers aufzubringen. Ein Pulvermitnehmer wird über eine Trägerebene bewegt, wobei der Pulvermitnehmer im Bereich einer der Trägerebene zugewandten Oberfläche mit einem Oberflächenprofil versehen ist. Das Oberflächenprofil umfasst ein Mitnahmeelement sowie einen Durchlasskanal. Das Mitnahmeelement und der Durchlasskanal sind so geformt und angeordnet, dass bezogen auf die Bewegung des Pulvermitnehmers über die Trägerebene vor dem Pulvermitnehmer auf der Trägerebene abgelagertes pulverförmiges Material bei einer Bewegung des Pulvermitnehmers über die Trägerebene in einer ersten Bewegungsrichtung mitgenommen wird und bei einer Bewegung des Pulvermitnehmers über die Trägerebene in einer der ersten Bewegungsrichtung entgegengesetzten zweiten Bewegungsrichtung durch den Durchlasskanal geleitet wird.

Das bezogen auf die Bewegung des Pulvermitnehmers über die Trägerebene vor dem Pulvermitnehmer auf der Trägerebene abgelagerte pulverförmige Material wird bei einer Bewegung des Pulvermitnehmers über die Oberfläche des Trägers in der ersten Bewegungsrichtung vorzugsweise in einen Auffangschacht und/oder einen außerhalb eines gasströmungskritischen Bereichs liegenden Auffangbereich gefördert. In dem Auffangschacht kann das pulverförmige Material gesammelt und anschließend aufbereitet oder entsorgt werden.

Eine Anlage zur Herstellung eines dreidimensionalen Werkstücks mithilfe eines generativen Schichtbauverfahrens umfasst eine oben beschriebene Pulverauftragsvorrichtung.

Vorzugsweise umfasst die Anlage ferner einen Auffangschacht und/oder einen außerhalb eines gasströmungskritischen Bereichs liegenden Auffangbereich, der dazu eingerichtet ist, von dem Pulvermitnehmer bei seiner Bewegung über die Trägerebene in der ersten Bewegungsrichtung mitgenommenes pulverförmiges Material aufzunehmen. Bezogen auf die Bewegung des Pulvermitnehmers über die Trägerebene in der ersten Bewegungsrichtung kann der Auffangschacht hinter dem Träger angeordnet sein.

Die Anlage zur Herstellung eines dreidimensionalen Werkstücks kann ferner mindestens einen Überlaufschacht zur Aufnahme von überschüssigem Rohstoffpulver umfassen, das von dem Verteilelement bei seiner Bewegung über die Oberfläche des Trägers mitgenommen und von der Oberfläche des Trägers in einen zu dem Träger benachbarten Bereich der Trägerebene geschoben wird. Vorzugsweise umfasst die Anlage zwei Überlaufschächte, die bezogen auf die Bewegung des Verteilelements über die Oberfläche des Trägers zu beiden Seiten des Trägers angeordnet sind. Das Verteilelement kann dann bei einer Bewegung über die Oberfläche des Trägers in der ersten Bewegungsrichtung überschüssiges Rohstoffpulver von der Oberfläche des Trägers in einen ersten Überlaufschacht fördern, der bezogen auf die erste Bewegungsrichtung des Verteilelements über die Oberfläche des Trägers hinter dem Träger angeordnet ist. Bei einer Bewegung über die Oberfläche des Trägers in der zweiten Bewegungsrichtung kann das Verteilelement dagegen überschüssiges Rohstoffpulver von der Oberfläche des Trägers in einen zweiten Überlaufschacht fördern, der bezogen auf die zweite Bewegungsrichtung des Verteilelements über die Oberfläche des Trägers hinter dem Träger angeordnet ist.

Der Auffangschacht kann in der zu der ersten und der zweiten Bewegungsrichtung des Pulvermitnehmers über die Trägerebene im Wesentlichen senkrechten Richtung benachbart zu dem ersten Überlaufschacht angeordnet sein. Falls gewünscht, können der Auffangschacht und der erste Überlaufschacht von einem gemeinsamen Schachtgitter abgedeckt sein. Vorzugsweise ist der Auffangschacht von dem ersten Überlaufschacht jedoch durch eine Trennwand getrennt. Dadurch kann das von dem Pulvermitnehmer in den Auffangschacht geförderte pulverförmige Material von dem von dem Verteilelement in den ersten Überlaufschacht geförderten überschüssigen Rohstoffpulver getrennt werden. Das pulverförmige Material aus dem Auffangschacht und das überschüssige Rohstoffpulver aus dem ersten Überlaufschacht können dann separat voneinander aus der Prozesskammer abgeführt werden. Während das nicht verunreinigte überschüssige Rohstoffpulver aus dem ersten Überlaufschacht dann unmittelbar wiederverwendet werden kann, kann das pulverförmige Material aus dem Auffangschacht entweder entsorgt oder für eine weitere Verwendung aufbereitet werden.

Die Erfindung wird im Folgenden anhand der beigefügten schematischen Figuren näher erläutert, von denen
- Figur 1: eine schematische Draufsicht der relevanten Komponenten einer Anlage zur Herstellung eines dreidimensionalen Werkstücks mithilfe eines generativen Schichtbauverfahrens zeigt,
- Figur 2: eine erste Variante eines Oberflächenprofils eines Pulvermitnehmers zeigt, der in einer Pulverauftragsvorrichtung der Anlage gemäß Figur 1 zum Einsatz kommt,
- Figur 3: eine zweite Variante eines Oberflächenprofils des Pulvermitnehmers zeigt, der in der Pulverauftragsvorrichtung der Anlage gemäß Figur 1 zum Einsatz kommt, und
- Figur 4: eine dritte Variante eines Obertragflächenprofils des Pulvermitnehmers zeigt, der in der Pulverauftragsvorrichtung der Anlage gemäß Figur 1 zum Einsatz kommt.

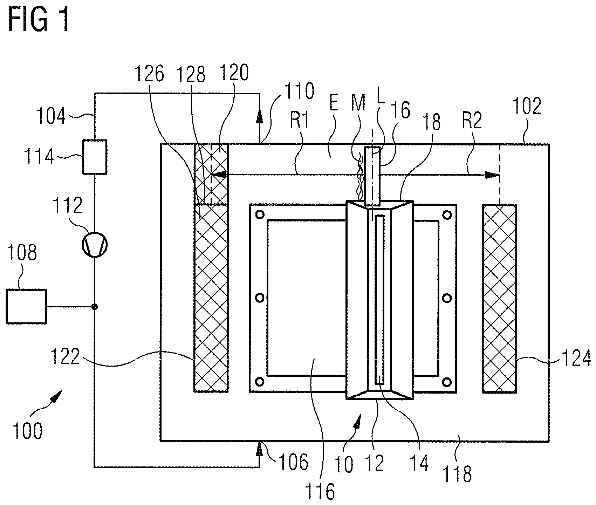

Figur 1 zeigt eine schematische Draufsicht der relevanten Komponenten einer Anlage 100 zur Herstellung eines dreidimensionalen Werkstücks mithilfe eines generativen Schichtbauverfahrens. Die Anlage 100 umfasst eine Prozesskammer 102 sowie eine in Figur 1 nicht gezeigte oberhalb der Prozesskammer 102 angeordnete Bestrahlungseinrichtung. Die Prozesskammer 102 ist gegenüber der Umgebungsatmosphäre abgedichtet, so dass in der Prozesskammer 102 bei Bedarf eine Inert- oder Reaktionsgasatmosphäre oder ein gegenüber dem Atmosphärendruck verringerter Druck eingestellt werden kann. Hierzu ist die Prozesskammer 102 mit einem Gaskreislauf 104 verbunden.

Über einen Gaseinlass 106 kann der Prozesskammer 102 Gas von einer Gasquelle 108 zugeführt werden. Nach dem Durchströmen der Prozesskammer 102 wird das Gas über einen Gasauslass 110 aus der Prozesskammer 102 abgeführt. Zur Förderung des Gases durch den Gaskreislauf 104 ist in dem Gaskreislauf 104 eine beispielsweise in Form eines Gebläses ausgebildete Fördereinrichtung 112 angeordnet. Über den Gasauslass 110 aus der Prozesskammer 102 abgeführtes Gas kann partikelförmige Verunreinigungen, wie zum Beispiel Pulverpartikel, Schweißrauchpartikel oder Kondensatpartikel enthalten. Daher ist in dem Gaskreislauf 104 ein Gasfilter 114 angeordnet, durch den das aus der Prozesskammer 102 abgeführte Gas geleitet und von partikelförmigen Verunreinigungen befreit wird, bevor es durch den Gaseinlass 106 in die Prozesskammer 102 zirkuliert wird.

In der Prozesskammer 102 ist ein Träger 116 angeordnet, der dazu dient, Rohstoffpulver sowie das durch ein generatives Schichtbauverfahren aus dem Rohstoffpulver hergestelltes Werkstück aufzunehmen. Der Träger 116 ist relativ zu der Prozesskammer 102 in vertikaler Richtung nach unten in eine in Figur 1 nicht veranschaulichte Baukammer verschiebbar. Alternativ dazu ist auch eine umgekehrte Konfiguration möglich, bei der Träger 116 stationär bleibt, während die übrigen Komponenten angehoben werden.

Eine Pulverauftragsvorrichtung 10 ist über die Oberfläche des Trägers 116 bewegbar, um das zur Herstellung des Werkstücks vorgesehene Rohstoffpulver schichtweise auf die Oberfläche des Trägers 116 aufzubringen. Die Pulverauftragsvorrichtung 10 umfasst ein Verteilelement 12, das sich im Betrieb der Pulverauftragsvorrichtung 10 in horizontaler Richtung über die Oberfläche des Trägers 116 oder eine bereits auf die Oberfläche des Trägers 116 aufgetragene Pulverschicht bewegt und dabei eine neue Pulverschicht aufträgt. Ein Pulverreservoir 14 zur Aufnahme des auf den Träger 116 aufzubringende Rohstoffpulver ist in das Verteilelement 12 der Pulverauftragsvorrichtung 10 integriert und bewegt sich folglich gemeinsam mit dem Verteilelement 12 über die Oberfläche des Trägers 116.

Das von der Pulverauftragsvorrichtung 10 auf den Träger 116 aufgetragene Rohstoffpulver wird ortselektiv mit der von der Bestrahlungseinrichtung emittierten Strahlung beaufschlagt. Der durch die Bestrahlung verursachte Wärmeeintrag in das Rohstoffpulver bewirkt ein Verschmelzen bzw. Versintern der Partikel des Rohstoffpulvers, wodurch auf dem Träger 116 aus dem Rohstoffpulver Schicht für Schicht das Werkstück aufgebaut wird.

Die Bestrahlungseinrichtung umfasst eine Strahlquelle, vorzugsweise eine Laserquelle, die beispielsweise Licht bei einer Wellenlänge von ungefähr 1064 nm emittiert. Die Bestrahlungseinrichtung weist ferner optische Elemente, wie beispielsweise eine Scan-Einheit, eine Fokussier-Einheit und eine F-Theta-Linse auf. Die Scan-Einheit ist dazu eingerichtet, den Strahl über die oberste Rohstoffpulverschicht innerhalb einer horizontalen Ebene (in x-Richtung und y-Richtung) zu scannen. Die Fokussier-Einheit ist dazu eingerichtet, eine Fokus-Position des Strahls (in z-Richtung) zu verändern bzw. anzupassen. Falls gewünscht, kann die Bestrahlungseinrichtung auch mehrere Scan-Einheiten und ggf. auch mehrere Strahlungsquellen umfassen.

Ferner umfasst die Pulverauftragsvorrichtung 10 einen Pulvermitnehmer 16. Der Pulvermitnehmer 16 ist an dem Verteilelement 12 befestigt und bewegt sich demzufolge gemeinsam mit dem Verteilelement 12 in der Prozesskammer 102 hin und her. Da sich der Pulvermitnehmer 16 von einer Seitenfläche 18 des Verteilelements 12 erstreckt, überstreicht bzw. überfährt der Pulvermitnehmer 16 jedoch, anders als das Verteilelement 12, nicht den Träger 116, sondern eine Trägerebene E. Bei der in der Figur 1 gezeigten Ausführungsform der Anlage 100 wird die Trägerebene E durch einen zu dem Träger 116 benachbarten Bereich einer Bodenplatte 118 der Prozesskammer 102 definiert.

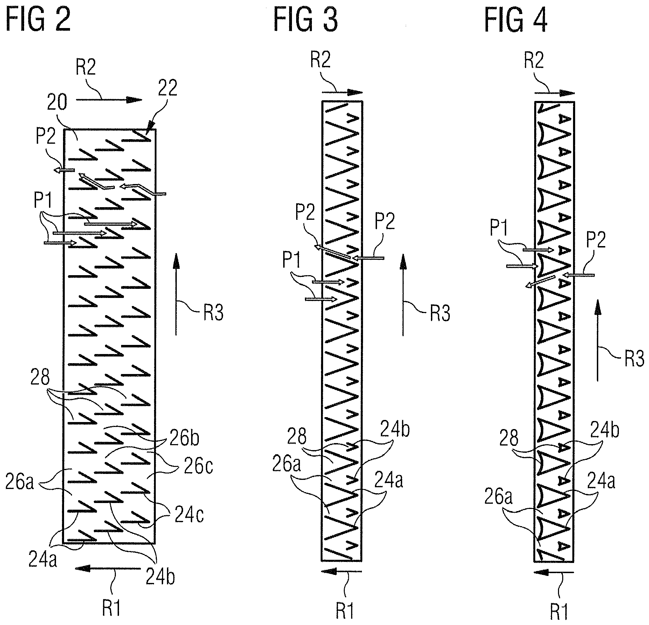

Im Bereich einer der Trägerebene E zugewandten Oberfläche 20 ist der Pulvermitnehmer 16 mit einem Oberflächenprofil 22 versehen. In den Figuren 2 bis 4 sind verschiedene Varianten des auf der Oberfläche 20 des Pulvermitnehmers 16 ausgebildeten Oberflächenprofils 22 dargestellt. Das Oberflächenprofil 22 umfasst eine Mehrzahl von Mitnahmeelementen 24a, 24b, 24c sowie eine Mehrzahl von zwischen den Mitnahmeelementen 24a, 24b, 24c angeordneten Durchlasskanälen 26a, 26b, 26c. Die Mitnahmeelemente 24a, 24b, 24c und die Durchlasskanäle 26a, 26b, 26c sind so geformt und angeordnet, dass bezogen auf die Bewegung des Pulvermitnehmers 16 über die Trägerebene E vor dem Pulvermitnehmer 16 auf der Trägerebene E abgelagertes pulverförmiges Material M bei einer Bewegung des Pulvermitnehmers 16 über die Trägerebene E in einer ersten Bewegungsrichtung R1 von den Mitnahmeelementen 24a, 24b, 24c mitgenommen wird. Bei einer Bewegung des Pulvermitnehmers 16 über die Trägerebene E in einer der ersten Bewegungsrichtung R1 entgegengesetzten zweiten Bewegungsrichtung R2 wird das auf der Trägerebene E abgelagerte pulverförmige Material M dagegen durch die Durchlasskanäle 26a, 26b, 26c geleitet.

Die Bewegungspfade des pulverförmigen Materials M relativ zu dem Oberflächenprofil 22 bei einer Bewegung des Pulvermitnehmers 16 über die Trägerebene E in einer ersten Bewegungsrichtung R1 sind in den Figuren 2 bis 4 durch die Pfeile P1 veranschaulicht. Dagegen veranschaulichen die Pfeile P2 in den Figuren 2 bis 4 die Bewegungspfade des pulverförmigen Materials M relativ zu dem Oberflächenprofil 22 bei einer Bewegung des Pulvermitnehmers 16 über die Trägerebene E in einer zweiten Bewegungsrichtung R2.

Pulverförmiges Material M, das sich vor dem Gasauslass 110 auf der Trägerebene E ansammelt, kann mithilfe des Pulvermitnehmers 16 aus diesem Bereich der Trägerebene E abgeführt und in der ersten Bewegungsrichtung R1 des Pulvermitnehmers 16 von dem Pulvermitnehmer 16 über die Trägerebene E geschoben werden. Gleichzeitig wird verhindert, dass der Pulvermitnehmer 16 bei einer Bewegung über die Trägerebene E in der zweiten Bewegungsrichtung R2 auf der Trägerebene E abgelagertes pulverförmiges Material M in den vor dem Gasauslass 110 liegenden Bereich der Trägerebene E transportiert. Dadurch kann eine unerwünschte Ansammlung von pulverförmigem Material M in der Nähe des Gasauslasses 110 vermieden werden.

Wie am besten aus den Figuren 2 bis 4 ersichtlich wird, sind die an dem Pulvermitnehmer 16 ausgebildeten Mitnahmeelemente 24a, 24b, 24c im Bereich eines bezogen auf die Bewegung des Pulvermitnehmers 16 über die Trägerebene E in der zweiten Bewegungsrichtung R2 vorderen Endes spitz zulaufend ausgebildet. Dadurch kann das pulverförmiges Material M bei einer Bewegung des Pulvermitnehmers 16 über die Trägerebene E in der zweiten Bewegungsrichtung R2 an den Mitnahmeelementen 24a, 24b, 24c vorbei in die zwischen den Mitnahmeelementen 24a, 24b, 24c vorhandenen Durchlasskanäle 26a, 26b, 26c geleitet werden.

Im Gegensatz dazu sind die Mitnahmeelemente 24a, 24b, 24c im Bereich eines bezogen auf die Bewegung des Pulvermitnehmers 16 über die Trägerebene E in der ersten Bewegungsrichtung R1 vorderen Endes mit einem Pulverauffangabschnitt 28 versehen. Bei den in den Figuren 2 und 3 veranschaulichte Mitnahmeelementen 24a, 24b, 24c wird der Pulverauffangabschnitt 28 jeweils durch einen von Seitenwänden der Mitnahmeelemente 24a, 24b, 24c begrenzten Hohlraum gebildet. Im Gegensatz dazu weisen die in der Figur 4 gezeigten Mitnahmeelemente 24a, 24b, 24c jeweils einen Pulverauffangabschnitt 28, der durch eine gekrümmte Fläche gebildet wird, welche bei einer Bewegung des Pulvermitnehmers 16 über die Trägerebene E in der ersten Bewegungsrichtung R1 mit dem auf der Trägerebene E abgelagerten pulverförmigen Material M in Kontakt gelangt und dieses dementsprechend mitnimmt.

Die Mitnahmeelemente 24a, 24b, 24c des Oberflächenprofils 22 gemäß Figur 2 sind hakenförmig ausgebildet, während die Mitnahmeelemente 24a, 24b, 24c des Oberflächenprofils 22 gemäß Figur 3 V-förmig ausgebildet sind. Die Mitnahmeelemente 24a, 24b, 24c des Oberflächenprofil 2 20 gemäß Figur 4 sind dagegen keilförmig ausgebildet und, wie oben beschrieben, mit einem durch eine gekrümmte Fläche definierten Pulverauffangabschnitt 28 versehen.

Die Mitnahmeelemente 24a, 24b, 24c sind in allen drei hier gezeigten Oberflächenprofilvarianten in mehrere Gruppen unterteilt. Insbesondere umfasst jedes der in den Figuren 2 bis 4 gezeigten Oberflächenprofile 22 eine erste Gruppe von Mitnahmeelementen 24a, die in einer zu der ersten und der zweiten Bewegungsrichtung R1, R2 des Pulvermitnehmers 16 über die Trägerebene E im Wesentlichen senkrechten Richtung R3, in einer Reihe nebeneinander angeordnet sind. Die zu der ersten und der zweiten Bewegungsrichtung R1, R2 senkrechte Richtung R3 erstreckt sich parallel zu einer Längsachse L des Pulvermitnehmers 16. Zwischen zueinander benachbarten Mitnahmeelementen 24a der ersten Gruppe ist jeweils ein Durchlasskanal 26a vorhanden.

Ferner umfasst jedes der Oberflächenprofile 22 eine zweite Gruppe von Mitnahmeelementen 24b, die in der zu der ersten und der zweiten Bewegungsrichtung R1, R2 im Wesentlichen senkrechten Richtung R3 in einer Reihe nebeneinander angeordnet sind. Darüber hinaus sind die Mitnahmeelemente 24b der zweiten Gruppe bezogen auf die erste Bewegungsrichtung R1 des Pulvermitnehmers 16 über die Trägerebene E hinter der ersten Gruppe von Mitnahmeelementen 24a zumindest teilweise in den zwischen den Mitnahmeelementen 24a der ersten Gruppe vorhandenen Durchlasskanälen 26a angeordnet.

Bei der in Figur 2 gezeigten Variante eines Oberflächenprofils 22 ragt lediglich ein Abschnitt der Mitnahmeelemente 24b der zweiten Gruppe in die zwischen den Mitnahmeelementen 24a der ersten Gruppe vorhandenen Durchlasskanäle 26a. Im Gegensatz dazu sind die Mitnahmeelemente 24b der zweiten Gruppe bei den in den Figuren 3 und 4 gezeigten Oberflächenprofilvarianten jeweils vollständig in den zwischen den Mitnahmeelementen 24a der ersten Gruppe vorhandenen Durchlasskanälen 26a aufgenommen.

Bei allen in den Figuren 2 bis 4 gezeigten Oberflächenprofilvarianten sind jedoch die Mitnahmeelemente 24b der zweiten Gruppe so geformt und angeordnet, dass sie bei einer Bewegung des Pulvermitnehmers 16 über die Trägerebene E in der ersten Bewegungsrichtung R1 zwischen den Mitnahmeelementen 24a der ersten Gruppe in die Durchlasskanäle 26a eintretendes pulverförmiges Material M auffangen und mitnehmen, siehe Pfeile P1 in den Figuren 2 bis 4. Bei einer Bewegung des Pulvermitnehmers 16 über die Trägerebene E in der ersten Bewegungsrichtung R1 treffen folglich zunächst die Mitnahmeelemente 24a der ersten Gruppe auf das auf der Trägerebene E abgelagerte pulverförmige Material M. Ein Teil des pulverförmigen Materials M wird dann bereits von den Mitnahmeelementen 24a der ersten Gruppe, d.h. insbesondere deren Pulverauffangabschnitten 28, aufgefangen und mitgenommen. Zunächst in die Durchlasskanäle 26a zwischen den Mitnahmeelementen 24a der ersten Gruppe eintretendes pulverförmiges Material M trifft dagegen im weiteren Verlauf der Bewegung des Pulvermitnehmers 16 über die Trägerebene E in der ersten Bewegungsrichtung R1 auf die Mitnahmeelemente 24b der zweiten Gruppe und wird von diesen, das heißt insbesondere deren Pulverauffangabschnitten 28, aufgefangen und mitgenommen.

Ferner sind die Mitnahmeelemente 24b der zweiten Gruppe so geformt und angeordnet, dass sie bei einer Bewegung des Pulvermitnehmers 16 über die Trägerebene E in der zweiten Bewegungsrichtung R2 in die Durchlasskanäle 26a eintretendes pulverförmiges Material M durch die Durchlasskanäle 26a leiten, d.h. ein Hindurchtreten des pulverförmigen Materials M durch die Durchlasskanäle 26a erlauben, siehe Pfeile P2 in den Figuren 2 bis 4.

Bei dem in in der Figur 2 gezeigten Oberflächenprofil 22 sind die Mitnahmeelemente 24a der ersten Gruppe bezogen auf die zweite Bewegungsrichtung R2 des Pulvermitnehmers 16 über die Trägerebene E hinter den Mitnahmeelementen 24b der zweiten Gruppe angeordnet. Folglich treffen bei einer Bewegung des Pulvermitnehmers 16 über die Trägerebene E in der zweiten Bewegungsrichtung R2 zuerst die Mitnahmeelemente 24b der zweiten Gruppe und erst dann die Mitnahmeelemente 24a der ersten Gruppe auf das auf der Trägerebene E abgelagerte Material M. Im Gegensatz dazu sind die in den Figuren 3 und 4 gezeigten Oberflächenprofile 22 so gestaltet, dass die Mitnahmeelemente 24b der zweiten Gruppe bezogen auf die zweite Bewegungsrichtung R2 des Pulvermitnehmers 16 über die Trägerebene E auf einer Höhe mit den Mitnahmeelementen 24a der ersten Gruppe angeordnet sind. In diesem Fall treffen bei einer Bewegung des Pulvermitnehmers 16 über die Trägerebene E in der zweiten Bewegungsrichtung R2 die Mitnahmeelemente 24a, 24b der ersten und der zweiten Gruppe gleichzeitig auf das auf der Trägerebene E abgelagerte pulverförmige Material M, so dass das pulverförmige Material an den Mitnahmeelementen 24b der zweiten Gruppe vorbei durch die zwischen den Mitnahmeelementen 24a der ersten Gruppe vorgesehenen Durchlasskanäle 26a geleitet wird.

Bei dem in der Figur 2 gezeigten Oberflächenprofil 22 sind die Mitnahmeelemente 24b der zweiten Gruppe ferner in der zu der ersten und der zweiten Bewegungsrichtung R1, R2 des Pulvermitnehmers 16 über die Trägerebene E im Wesentlichen senkrechten Richtung R3 versetzt zu den Mitnahmeelementen 24a der ersten Gruppe angeordnet, wobei in jeden zwischen zwei Mitnahmeelementen 24a der ersten Gruppe vorhandenen Durchlasskanal 26a ein Mitnahmeelement 24b der zweiten Gruppe ragt. Ferner umfasst das Figur 2 gezeigte Oberflächenprofil 22 eine dritte Gruppe von Mitnahmeelementen 24c. Die Mitnahmeelemente 24c der dritten Gruppe sind in der zu der ersten und der zweiten Bewegungsrichtung R1, R2 des Pulvermitnehmers 16 über die Trägerebene E im Wesentlichen senkrechten Richtung R3 in einer Reihe nebeneinander und zu den Mitnahmeelementen 24a, 24b der ersten und der zweiten Gruppe versetzt angeordnet.

Bezogen auf die erste Bewegungsrichtung R1 des Pulvermitnehmers 16 über die Trägerebene E sind die Mitnahmeelemente 24c der dritten Gruppe hinter der zweiten Gruppe 24b von Mitnahmeelementen angeordnet und ragen jeweils in zwischen den Mitnahmeelementen 24b der zweiten Gruppe vorhandene Durchlasskanäle 26b. Schließlich umfasst das Oberflächenprofil 22 gemäß Figur 2 Durchlasskanäle 26c, die jeweils zwischen zwei zueinander benachbarten Mitnahmeelementen 24c der dritten Gruppe angeordnet sind. Jeder Durchlasskanal 26a ist mit einem Durchlasskanal 26b verbunden und jeder Durchlasskanal 26b ist seinerseits mit einem Durchlasskanal 26c verbunden, so dass auf der Trägerebene E abgelagertes Material M bei einer Bewegung des Pulvermitnehmers 16 über die Trägerebene E in der zweiten Bewegungsrichtung R2 nacheinander durch die Durchlasskanäle 26c, 26b, 26a hindurchtreten kann, siehe Pfeile P2 in Figur 2.

Bei dem in Figur 2 gezeigten Oberflächenprofil 22 sind die Mitnahmeelemente 24a der ersten Gruppe, die Mitnahmeelemente 24b der zweiten Gruppe und die Mitnahmeelemente 24c der dritten Gruppe identisch geformt. Im Gegensatz dazu haben die Mitnahmeelemente 24a der ersten Gruppe und die Mitnahmeelemente 24b der zweiten Gruppe bei den Oberflächenprofilen 22 gemäß der Figuren 3 und 4 lediglich eine identische geometrische Grundform, sind jedoch unterschiedlich groß. Insbesondere sind die Mitnahmeelemente 24b der zweiten Gruppe kleiner als die Mitnahmeelemente 24b der ersten Gruppe.

Im Betrieb der Anlage 100 wird das von dem Pulvermitnehmer 16 bei einer Bewegung über die Trägerebene E in der ersten Bewegungsrichtung R1 mitgenommene Pulvermaterial M von dem Pulvermitnehmer 16 in einen Auffangschacht 120 befördert, der bezogen auf die Bewegung des Pulvermitnehmers 16 über die Trägerebene E in der ersten Bewegungsrichtung R1 hinter dem Träger 116 und in der zu der ersten und der zweiten Bewegungsrichtung R1, R2 des Pulvermitnehmers 16 über die Trägerebene E im Wesentlichen senkrechten Richtung R3 versetzt zu dem Träger 116 angeordnet ist. Dementsprechend ist der Auffangschacht 120 ausreichend weit von dem Gasauslass 110 der Prozesskammer 102 entfernt.

Der Auffangschacht 120 ist benachbart zu einem ersten Überlaufschacht 122 angeordnet. Der erste Überlaufschacht 122 dient dazu, überschüssiges Rohstoffpulver aufzunehmen, das von dem Verteilelement 12 bei einer Bewegung über die Oberfläche des Trägers 116 in der ersten Bewegungsrichtung R1 von der Oberfläche des Trägers 116 abtransportiert wird. Ferner ist ein zweiter Überlaufschacht 124 vorgesehen, der dazu dient, überschüssiges Rohstoffpulver aufzunehmen, das von dem Verteilelement 12 bei einer Bewegung über die Oberfläche des Trägers 116 in der zweite Bewegungsrichtung R2 von der Oberfläche des Trägers 116 abtransportiert wird.

Der Auffangschacht 120 und der erste Überlaufschacht 122 sind von einem gemeinsamen Schachtgitter 126 abgedeckt. Der Auffangschacht 120 ist jedoch von dem ersten Überlaufschacht 122 durch eine Trennwand 128 getrennt. Dadurch kann das von dem Pulvermitnehmer 16 in den Auffangschacht 120 geförderte pulverförmige Material M von dem von dem Verteilelement 12 in den ersten Überlaufschacht 122 geförderten überschüssigen Rohstoffpulver getrennt und separat davon aus der Prozesskammer 102 abgeführt werden. Das nicht verunreinigte überschüssige Rohstoffpulver aus dem ersten Überlaufschacht 122 kann dann unmittelbar wiederverwendet werden. Das pulverförmige Material M aus dem Auffangschacht 120 kann dagegen entweder entsorgt oder für eine weitere Verwendung aufbereitet werden.

## Patentansprüche

1. Pulverauftragsvorrichtung (10) zur Verwendung in einer Anlage (100) zur Herstellung eines dreidimensionalen Werkstücks mithilfe eines generativen Schichtbauverfahrens, wobei die Pulverauftragsvorrichtung (10) umfasst:
- ein Verteilelement (12), das über eine Oberfläche eines Trägers (116) bewegbar ist, um ein Rohstoffpulver zur Herstellung eines Werkstücks durch ein generatives Schichtbauverfahren auf die Oberfläche des Trägers (116) aufzubringen, und
- einen über eine Trägerebene (E) bewegbaren Pulvermitnehmer (16), der im Bereich einer der Trägerebene (E) zugewandten Oberfläche (20) mit einem Oberflächenprofil (22) versehen ist, das ein Mitnahmeelement (24a, 24b, 24c) sowie einen Durchlasskanal (26a, 26b, 26c) umfasst, wobei das Mitnahmeelement (24a, 24b, 24c) und der Durchlasskanal (26a, 26b, 26c) so geformt und angeordnet sind, dass bezogen auf die Bewegung des Pulvermitnehmers (16) über die Trägerebene (E) vor dem Pulvermitnehmer (16) auf der Trägerebene (E) abgelagertes pulverförmiges Material bei einer Bewegung des Pulvermitnehmers (16) über die Trägerebene (E) in einer ersten Bewegungsrichtung (R1) von dem Mitnahmeelement (24a, 24b, 24c) mitgenommen wird und bei einer Bewegung des Pulvermitnehmers (16) über die Trägerebene (E) in einer der ersten Bewegungsrichtung (R1) entgegengesetzten zweiten Bewegungsrichtung (R2) durch den Durchlasskanal (26a, 26b, 26c) geleitet wird.

2. Pulverauftragsvorrichtung nach Anspruch 1,
wobei der Pulvermitnehmer (16) an dem Verteilelement (12) befestigt ist und sich insbesondere in einer zu der ersten und der zweiten Bewegungsrichtung (R1, R2) des Pulvermitnehmers (16) über die Trägerebene (E) im Wesentlichen senkrechten Richtung (R3) von einer Seitenfläche des Verteilelements (12) erstreckt.

3. Pulverauftragsvorrichtung nach Anspruch 1 oder 2,
wobei das Oberflächenprofil (22) eine Mehrzahl von Mitnahmeelementen (24a, 24b, 24c) sowie eine Mehrzahl von zwischen den Mitnahmeelementen (24a, 24b, 24c) angeordneten Durchlasskanälen (26a, 26b, 26c) umfasst und wobei
- zumindest ein Teil der Mitnahmeelemente (24a, 24b, 24c) im Bereich eines bezogen auf die Bewegung des Pulvermitnehmers (16) über die Trägerebene (E) in der zweiten Bewegungsrichtung (R2) vorderen Endes spitz zulaufend ausgebildet ist, und/oder
- zumindest ein Teil der Mitnahmeelemente (24a, 24b, 24c) im Bereich eines bezogen auf die Bewegung des Pulvermitnehmers (16) über die Trägerebene (E) in der ersten Bewegungsrichtung (R1) vorderen Endes mit einem Pulverauffangabschnitt (28) versehen ist.

4. Pulverauftragsvorrichtung nach einem der Ansprüche 1 bis 3,
wobei das Oberflächenprofil (22) eine Mehrzahl von Mitnahmeelementen (24a, 24b, 24c) sowie eine Mehrzahl von zwischen den Mitnahmeelementen (24a, 24b, 24c) angeordneten Durchlasskanälen (26a, 26b, 26c) umfasst und wobei zumindest ein Teil der Mitnahmeelemente (24a, 24b, 24c) V-förmig, keilförmig und/oder hakenförmig ausgebildet ist.

5. Pulverauftragsvorrichtung nach einem der Ansprüche 1 bis 4,
wobei das Oberflächenprofil (22) des Pulvermitnehmers (16) eine erste Gruppe von Mitnahmeelementen (24a) umfasst, die in der zu der ersten und der zweiten Bewegungsrichtung (R1, R2) des Pulvermitnehmers (16) über die Trägerebene (E) im Wesentlichen senkrechten Richtung (R3) in einer Reihe nebeneinander angeordnet sind, wobei zwischen zueinander benachbarten Mitnahmeelementen (24a) der ersten Gruppe jeweils ein Durchlasskanal (26a) vorhanden ist.

6. Pulverauftragsvorrichtung nach Anspruch 5,
wobei das Oberflächenprofil (22) des Pulvermitnehmers (16) eine zweite Gruppe von Mitnahmeelementen (24b) umfasst, die in der zu der ersten und der zweiten Bewegungsrichtung (R1, R2) des Pulvermitnehmers (16) über die Trägerebene (E) im Wesentlichen senkrechten Richtung (R3) in einer Reihe nebeneinander und bezogen auf die erste Bewegungsrichtung (R1) des Pulvermitnehmers (16) über die Trägerebene (E) hinter der ersten Gruppe von Mitnahmeelementen (24a) zumindest teilweise in den zwischen den Mitnahmeelementen (24a) der ersten Gruppe vorhandenen Durchlasskanälen (26a) angeordnet sind.

7. Pulverauftragsvorrichtung nach Anspruch 6,
wobei die Mitnahmeelemente (24b) der zweiten Gruppe so geformt und angeordnet sind, dass sie bei einer Bewegung des Pulvermitnehmers (16) über die Trägerebene (E) in der ersten Bewegungsrichtung (R1) zwischen den Mitnahmeelementen (24a) der ersten Gruppe in die Durchlasskanäle (26a) eintretendes pulverförmiges Material auffangen und mitnehmen.

8. Pulverauftragsvorrichtung nach Anspruch 6 oder 7,
wobei die Mitnahmeelemente (24b) der zweiten Gruppe so geformt und angeordnet sind, dass sie bei einer Bewegung des Pulvermitnehmers (16) über die Trägerebene (E) in der zweiten Bewegungsrichtung (R2) in die Durchlasskanäle (26a) eintretendes pulverförmiges Material durch die Durchlasskanäle (26a) leiten.

9. Pulverauftragsvorrichtung nach einem der Ansprüche 6 bis 8,
wobei
- die Mitnahmeelemente (24b) der zweiten Gruppe in der zu der ersten und der zweiten Bewegungsrichtung (R1, R2) des Pulvermitnehmers (16) über die Trägerebene (E) im Wesentlichen senkrechten Richtung (R3) versetzt zu den Mitnahmeelementen (24a) der ersten Gruppe angeordnet sind,
- das Oberflächenprofil (22) des Pulvermitnehmers (16) eine dritte Gruppe von Mitnahmeelementen (24c) umfasst, die in der zu der ersten und der zweiten Bewegungsrichtung (R1, R2) des Pulvermitnehmers (16) über die Trägerebene (E) im Wesentlichen senkrechten Richtung (R3) in einer Reihe nebeneinander und/oder versetzt zu den Mitnahmeelementen (24a, 24b) der ersten und/oder der zweiten Gruppe angeordnet sind, und/oder die bezogen auf die erste Bewegungsrichtung (R1) des Pulvermitnehmers (16) über die Trägerebene (E) hinter der zweiten Gruppe von Mitnahmeelementen (24b) zumindest teilweise in zwischen den Mitnahmeelementen (24b) der zweiten Gruppe vorhandenen Durchlasskanälen (26bc) angeordnet sind, und/oder
- die Mitnahmeelemente (24a) der ersten Gruppe, die Mitnahmeelemente (24b) der zweiten Gruppe und/oder die Mitnahmeelemente (24c) der dritten Gruppe im Wesentlichen identisch geformt sind.

10. Pulverauftragsvorrichtung nach einem der Ansprüche 6 bis 8,
wobei
- die Mitnahmeelemente (24b) der zweiten Gruppe vollständig in den in zwischen den Mitnahmeelementen (24a) der ersten Gruppe vorhandenen Durchlasskanälen (26a) angeordnet sind und/oder
- die Mitnahmeelemente (24a) der ersten Gruppe und die Mitnahmeelemente (24b) der zweiten Gruppe eine im Wesentlichen identische geometrische Grundform aufweisen und/oder die Mitnahmeelemente (24b) der zweiten Gruppe kleiner sind als die Mitnahmeelemente (24a) der ersten Gruppe.

11. Verfahren zum Betreiben einer Pulverauftragsvorrichtung (10), die zur Verwendung in einer Anlage (100) zur Herstellung eines dreidimensionalen Werkstücks mithilfe eines generativen Schichtbauverfahrens geeignet ist, wobei das Verfahren die folgenden Schritte umfasst:
- Bewegen eines Verteilelements (12) über eine Oberfläche eines Trägers (116), um ein Rohstoffpulver zur Herstellung eines Werkstücks durch ein generatives Schichtbauverfahren auf die Oberfläche des Trägers (116) aufzubringen, und
- Bewegen eines Pulvermitnehmers (16) über eine Trägerebene (E), wobei der Pulvermitnehmer (16) im Bereich einer der Trägerebene (E) zugewandten Oberfläche (20) mit einem Oberflächenprofil (22) versehen ist, das ein Mitnahmeelement (24a, 24b, 24c) sowie einen Durchlasskanal (26a, 26b, 26c) umfasst, wobei das Mitnahmeelement (24a, 24b, 24c) und der Durchlasskanal (26a, 26b, 26c) so geformt und angeordnet sind, dass bezogen auf die Bewegung des Pulvermitnehmers (16) über die Trägerebene (E) vor dem Pulvermitnehmer (16) auf der Trägerebene (E) abgelagertes pulverförmiges Material bei einer Bewegung des Pulvermitnehmers (16) über die Trägerebene (E) in einer ersten Bewegungsrichtung (R1) von dem Mitnahmeelement (24a, 24b, 24c) mitgenommen wird und bei einer Bewegung des Pulvermitnehmers (16) über die Trägerebene (E) in einer der ersten Bewegungsrichtung (R1) entgegengesetzten zweiten Bewegungsrichtung (R2) durch den Durchlasskanal (26a, 26b, 26c) geleitet wird.

12. Verfahren nach Anspruch 11,
wobei das bezogen auf die Bewegung des Pulvermitnehmers (16) über die Trägerebene (E) vor dem Pulvermitnehmer (16) auf der Trägerebene (E) abgelagerte pulverförmige Material bei einer Bewegung des Pulvermitnehmers (16) über die Oberfläche des Trägers (116) in der ersten Bewegungsrichtung (R1) in einen Auffangschacht (120) und/oder einen außerhalb eines gasströmungskritischen Bereichs liegenden Auffangbereich gefördert wird.

13. Anlage (100) zur Herstellung eines dreidimensionalen Werkstücks mithilfe eines generativen Schichtbauverfahrens, die eine Pulverauftragsvorrichtung (10) nach einem der Ansprüche 1 bis 10 umfasst.

14. Anlage nach Anspruch 13,
die ferner einen Auffangschacht (120) und/oder einen außerhalb eines gasströmungskritischen Bereichs liegenden Auffangbereich umfasst, der dazu eingerichtet ist, von dem Pulvermitnehmer (16) bei seiner Bewegung über die Trägerebene (E) in der ersten Bewegungsrichtung (R1) mitgenommenes pulverförmiges Material aufzunehmen.

15. Anlage nach Anspruch 14,
wobei der Auffangschacht (120)
- bezogen auf die Bewegung des Pulvermitnehmers (16) über die Trägerebene (E) in der erste Bewegungsrichtung (R1) hinter dem Träger (116) und/oder
- in der zu der ersten und der zweiten Bewegungsrichtung (R1, R2) des Pulvermitnehmers (16) über die Trägerebene (E) im Wesentlichen senkrechten Richtung (R3) versetzt zu dem Träger (116) angeordnet ist.

## Claims

1. A powder application device (10) for use in a system (100) for producing a three-dimensional workpiece using a generative layering process, the powder application device (10) comprising:
- a spreading member (12) movable across a surface of a carrier (116) for depositing a raw material powder for producing a workpiece by a generative layering method onto the surface of the carrier (116), and
- a powder entrainer (16) which is movable across a carrier plane (E) and which, in the region of a surface (20) facing the carrier plane (E), is provided with a surface profile (22) comprising an entraining element (24a, 24b, 24c) and a passage channel (26a, 26b, 26c), the entraining element (24a, 24b, 24c) and the passage channel (26a, 26b, 26c) being shaped and arranged in such a way that, with respect to the movement of the powder entrainer (16) across the carrier plane (E), powdery material deposited in front of the powder entrainer (16) on the carrier plane (E) is entrained by the entraining element (24a, 24b, 24c) during a movement of the powder entrainer (16) across the carrier plane (E) in a first direction of movement (R1), and is guided through the passage channel (26a, 26b, 26c) during a movement of the powder entrainer (16) across the carrier plane (E) in a second direction of movement (R2) opposite to the first direction of movement (R1).

2. The powder application device according to claim 1,
wherein the powder entrainer (16) is fixed to the spreading member (12) and extends, in particular, in a direction (R3) substantially perpendicular to the first and the second direction of movement (R1, R2) of the powder entrainer (16) across the carrier plane (E) from a side surface of the spreading member (12).

3. The powder application device according to claim 1 or 2,
wherein the surface profile (22) comprises a plurality of entraining elements (24a, 24b, 24c) and a plurality of passage channels (26a, 26b, 26c) arranged between the entraining elements (24a, 24b, 24c), and wherein
- at least a part of the entraining elements (24a, 24b, 24c) is designed to be tapered in the region of a, with respect to the movement of the powder entrainer (16) across the carrier plane (E) in the second direction of movement (R2), front end, and/or
- at least a part of the entraining elements (24a, 24b, 24c) is provided with a powder collecting section (28) in the region of a, with respect to the movement of the powder entrainer (16) across the carrier plane (E) in the first direction of movement (R1), front end.

4. The powder application device according to anyone of claims 1 to 3,
wherein the surface profile (22) comprises a plurality of entraining elements (24a, 24b, 24c) and a plurality of passage channels (26a, 26b, 26c) arranged between the entraining elements (24a, 24b, 24c), and wherein at least a part of the entraining elements (24a, 24b, 24c) is V-shaped, wedge-shaped and/or hook-shaped.

5. The powder application device according to anyone of claims 1 to 4,
wherein the surface profile (22) of the powder entrainer (16) comprises a first group of entraining elements (24a), which are arranged in a row next to one another in the direction (R3) substantially perpendicular to the first and the second direction of movement (R1, R2) of the powder entrainer (16) across the carrier plane (E), wherein a respective passage channel (26a) is present between mutually adjacent entraining elements (24a) of the first group.

6. The powder application device according to claim 5,
wherein the surface profile (22) of the powder entrainer (16) comprises a second group of entraining elements (24b) which are arranged in a row next to one another in the direction (R3) substantially perpendicular to the first and the second direction of movement (R1, R2) of the powder entrainer (16) across the carrier plane (E) and, with respect to the first direction of movement (R1) of the powder entrainer (16) across the carrier plane (E), behind the first group of entraining elements (24a) and at least partially in the passage channels (26a) present between the entraining elements (24a) of the first group.

7. The powder application device according to claim 6,
wherein the entraining elements (24b) of the second group are shaped and arranged in such a way that they capture and entrain powdery material entering the passageways (26a) between the entraining elements (24a) of the first group during movement of the powder entrainer (16) across the carrier plane (E) in the first direction of movement (R1).

8. The powder application device according to claim 6 or 7,
wherein the entraining elements (24b) of the second group are shaped and arranged to direct powdery material entering the passageways (26a) upon movement of the powder entrainer (16) across the carrier plane (E) in the second direction of movement (R2) through the passageways (26a).

9. The powder application device according to anyone of claims 6 to 8,
wherein
- the entraining elements (24b) of the second group, in the direction (R3) substantially perpendicular to the first and the second direction of movement (R1, R2) of the powder entrainer (16) across the carrier plane (E), are arranged offset to the entraining elements (24a) of the first group,
- the surface profile (22) of the powder entrainer (16) comprises a third group of entraining elements (24c) which are arranged in a row next to one another in the direction (R3) substantially perpendicular to the first and the second direction of movement (R1, R2) of the powder entrainer (16) across the carrier plane (E) and/or offset relative to the entraining elements (24a, 24b) of the first and/or of the second group, and/or which, with respect to the first direction of movement (R1) of the powder entrainer (16) across the carrier plane (E), are arranged behind the second group of entraining elements (24b) at least partially in passage channels (26bc) present between the entraining elements (24b) of the second group, and/or
- the entraining elements (24a) of the first group, the entraining elements (24b) of the second group and/or the entraining elements (24c) of the third group are substantially identically shaped.

10. The powder application device according to anyone of claims 6 to 8,
wherein
- the entraining elements (24b) of the second group are completely arranged in the passage channels (26a) present between the entraining elements (24a) of the first group and/or
- the entraining elements (24a) of the first group and the entraining elements (24b) of the second group have a substantially identical basic geometric shape and/or the entraining elements (24b) of the second group are smaller than the entraining elements (24a) of the first group.

11. A method of operating a powder application device (10) suitable for use in a system (100) for producing a three-dimensional workpiece using a generative layering process, the method comprising the steps of:
- moving a spreading member (12) across a surface of a carrier (116) to deposit a raw material powder for producing a workpiece by a generative layering method onto the surface of the carrier (116), and
- moving a powder entrainer (16) across a carrier plane (E), wherein the powder entrainer (16), in the region of a surface (20) facing the carrier plane (E), is provided with a surface profile (22) comprising an entraining element (24a, 24b, 24c) and a passage channel (26a, 26b, 26c), the entraining element (24a, 24b, 24c) and the passage channel (26a, 26b, 26c) being shaped and arranged in such a way that, with respect to the movement of the powder entrainer (16) across the carrier plane (E), powdery material deposited in front of the powder entrainer (16) on the carrier plane (E) is entrained by the entraining element (24a, 24b, 24c) during a movement of the powder entrainer (16) across the carrier plane (E) in a first direction of movement (R1), and is guided through the passage channel (26a, 26b, 26c) during a movement of the powder entrainer (16) across the carrier plane (E) in a second direction of movement (R2) opposite to the first direction of movement (R1).

12. The method according to claim 11,
wherein the powdery material which, with respect to the movement of the powder entrainer (16) across the carrier plane (E), is deposited on the carrier plane (E) in front of the powder entrainer (16), during a movement of the powder entrainer (16) across the surface of the carrier (116) in the first direction of movement (R1), is conveyed into a collecting chamber (120) and/or a collecting area located outside a gas flow-critical area.

13. A system (100) for producing a three-dimensional workpiece using a generative layering process, which comprises a powder application device (10) according to anyone of claims 1 to 10.

14. The system according to claim 13,
further comprising a collecting chamber (120) and/or a collecting area located outside a gas flow-critical area, which is adapted to receive powdery material entrained by the powder entrainer (16) during its movement across the carrier plane (E) in the first direction of movement (R1).

15. The system according to claim 14,
wherein the collecting chamber (120)
- with respect to the movement of the powder entrainer (16) across the carrier plane (E) in the first direction of movement (R1) is arranged behind the carrier (116)
and/or
- in the direction (R3) substantially perpendicular to the first and the second direction of movement (R1, R2) of the powder entrainer (16) across the carrier plane (E) is arranged relative to the carrier (116).

## Revendications

1. Dispositif d'application de poudre (10) destiné à être utilisé dans une installation (100) pour la fabrication d'une pièce tridimensionnelle selon un procédé de fabrication additive, le dispositif d'application de poudre (10) comprenant:
- un élément de distribution (12) mobile sur une surface d'un support (116) pour appliquer une poudre de matière première sur la surface du support (116) pour fabriquer une pièce selon un procédé de fabrication additive, et
- un entraîneur de poudre (16) mobile sur un plan de support (E), qui est pourvu, dans la zone d'une surface (20) tournée vers le plan de support (E), d'un profil de surface (22) qui comprend un élément d'entraînement (24a, 24b, 24c) ainsi qu'un canal de passage (26a, 26b, 26c), l'élément d'entraînement (24a, 24b, 24c) et le canal de passage (26a, 26b, 26c) étant formés et disposés de manière à ce que, par rapport au mouvement de l'entraîneur de poudre (16) sur le plan de support (E), la matière pulvérulente déposée sur le plan de support (E) devant l'entraîneur de poudre (16) est entraînée par l'élément d'entraînement (24a, 24b, 24c, 24d) dans une première direction de déplacement (R1) et lors d'un déplacement de l'entraîneur de poudre (16) sur le plan de support (E), et, lors d'un déplacement de l'entraîneur de poudre (16) sur le plan de support (E), dans une deuxième direction de déplacement (R2) opposée à la première direction de déplacement (R1), est guidé à travers le canal de passage (26a, 26b, 26c).

2. Dispositif d'application de poudre selon la revendication 1,
dans lequel l'entraîneur de poudre (16) est fixé à l'élément de distribution (12) et s'étend en particulier dans une direction (R3) sensiblement perpendiculaire à la première et à la deuxième direction de déplacement (R1, R2) de l'entraîneur de poudre (16) sur le plan de support (E) à partir d'une surface latérale de l'élément de distribution (12).

3. Dispositif d'application de poudre selon la revendication 1 ou 2,
dans lequel le profil de surface (22) comprend une pluralité d'éléments d'entraînement (24a, 24b, 24c) et une pluralité de canaux de passage (26a, 26b, 26c) disposés entre les éléments d'entraînement (24a, 24b, 24c), et dans lequel
- au moins une partie des éléments d'entraînement (24a, 24b, 24c) est réalisée en se terminant en pointe dans la zone d'une extrémité avant par rapport au déplacement de l'entraîneur de poudre (16) sur le plan de support (E) dans la deuxième direction de déplacement (R2), et/ou
- au moins une partie des éléments d'entraînement (24a, 24b, 24c) est pourvue d'une section de collecte de poudre (28) dans la zone d'une extrémité avant par rapport au déplacement de l'entraîneur de poudre (16) sur le plan de support (E) dans la première direction de déplacement (R1).

4. Dispositif d'application de poudre selon l'une quelconque des revendications 1 à 3,
dans lequel le profil de surface (22) comprend une pluralité d'éléments d'entraînement (24a, 24b, 24c) ainsi qu'une pluralité de canaux de passage (26a, 26b, 26c) disposés entre les éléments d'entraînement (24a, 24b, 24c) et au moins une partie des éléments d'entraînement (24a, 24b, 24c) étant réalisée en forme de V, de coin et/ou de crochet.

5. Dispositif d'application de poudre selon l'une quelconque des revendications 1 à 4,
dans lequel le profil de surface (22) de l'entraîneur de poudre (16) comprenant un premier groupe d'éléments d'entraînement (24a) qui sont disposés en une rangée les uns à côté des autres dans la direction (R3) essentiellement perpendiculaire à la première et à la deuxième direction de déplacement (R1, R2) de l'entraîneur de poudre (16) sur le plan de support (E), un canal de passage (26a) étant respectivement présent entre des éléments d'entraînement (24a) voisins les uns aux autres du premier groupe.

6. Dispositif d'application de poudre selon la revendication 5,
dans lequel le profil de surface (22) de l'entraîneur de poudre (16) comprend un deuxième groupe d'éléments d'entraînement (24b) qui sont disposés en une rangée les uns à côté des autres dans la direction perpendiculaire (R3) par rapport à la première et à la deuxième direction de déplacement (R1, R2) de l'entraîneur de poudre (16) sur le plan de support (E) et, par rapport à la première direction de déplacement (R1) de l'entraîneur de poudre (16) sur le plan de support (E), derrière le premier groupe d'éléments d'entraînement (24a) au moins partiellement dans les canaux de passage (26a) présents entre les éléments d'entraînement (24a) du premier groupe.

7. Dispositif d'application de poudre selon la revendication 6,
dans lequel les éléments d'entraînement (24b) du deuxième groupe étant formés et disposés de manière à ce que, lors d'un déplacement de l'entraîneur de poudre (16) sur le plan de support (E) dans la première direction de déplacement (R1), ils interceptent et entraînent dans les canaux de passage (26a) la matière pulvérulente qui pénètre entre les éléments d'entraînement (24a) du premier groupe.

8. Dispositif d'application de poudre selon la revendication 6 ou 7,
dans lequel les éléments d'entraînement (24b) du deuxième groupe sont formés et disposés de manière à ce que, lors d'un déplacement de l'entraîneur de poudre (16) sur le plan de support (E) dans la deuxième direction de déplacement (R2), ils guident la matière pulvérulente par les canaux de passage (26a) entrant dans les canaux de passage (26a).

9. Dispositif d'application de poudre selon l'une quelconque des revendications 6 à 8,
dans lequel
- les éléments d'entraînement (24b) du deuxième groupe sont décalés par rapport aux éléments d'entraînement (24a) du premier groupe dans la direction (R3) essentiellement perpendiculaire à la première et à la deuxième direction de déplacement (R1, R2) de l'entraîneur de poudre (16) sur le plan de support (E),
- le profil de surface (22) de l'entraîneur de poudre (16) comprend un troisième groupe d'éléments d'entraînement (24c) qui, dans la direction (R3) essentiellement perpendiculaire à la première et à la deuxième direction de déplacement (R1, R2) de l'entraîneur de poudre (16) sur le plan de support (E), sont disposés en une rangée les uns à côté des autres et/ou décalés par rapport aux éléments d'entraînement (24a, 24b) du premier et/ou du deuxième groupe, et/ou qui, par rapport à la première direction de déplacement (R1) de l'entraîneur de poudre (16) sur le plan porteur (E), sont disposés derrière le deuxième groupe d'éléments d'entraînement (24b) au moins partiellement dans des canaux de passage (26bc) présents entre les éléments d'entraînement (24b) du deuxième groupe, et/ou
- les éléments d'entraînement (24a) du premier groupe, les éléments d'entraînement (24b) du deuxième groupe et/ou les éléments d'entraînement (24c) du troisième groupe sont formés de manière sensiblement identique.

10. Dispositif d'application de poudre selon l'une quelconque des revendications 6 à 8,
dans lequel
- les éléments d'entraînement (24b) du deuxième groupe sont entièrement disposés dans les canaux de passage (26a) présents entre les éléments d'entraînement (24a) du premier groupe et/ou
- les éléments d'entraînement (24a) du premier groupe et les éléments d'entraînement (24b) du deuxième groupe présentent une forme géométrique de base sensiblement identique et/ou les éléments d'entraînement (24b) du deuxième groupe sont plus petits que les éléments d'entraînement (24a) du premier groupe.

11. Procédé de fonctionnement d'un dispositif d'application de poudre (10), qui est adapté pour à être utilisé dans une installation (100) pour la fabrication d'une pièce tridimensionnelle selon un procédé de fabrication additive, le procédé comprend les étapes suivantes consistant:
- déplacer un élément de distribution (12) sur une surface d'un support (116) afin de déposer une poudre de matière première sur la surface du support (116) pour fabriquer une pièce selon un procédé de fabrication additive, et
- déplacer un entraîneur de poudre (16) sur un plan de support (E), l'entraîneur de poudre (16) étant pourvu, dans la zone d'une surface (20) tournée vers le plan de support (E), d'un profil de surface (22) qui comprend un élément d'entraînement (24a, 24b, 24c) ainsi qu'un canal de passage (26a, 26b, 26c), l'élément d'entraînement (24a, 24b, 24c) et le canal de passage (26a, 26b, 26c) étant formés et disposés de manière à ce que, par rapport au déplacement de l'entraîneur de poudre (16) sur le plan de support (E), la matière pulvérulente déposée sur le plan de support (E) devant l'entraîneur de poudre (16) soit entraînée par l'élément d'entraînement (24a, 24b, 24c) dans une première direction de déplacement (R1) et lors d'un déplacement de l'entraîneur de poudre (16) sur le plan de support (E), dans une deuxième direction de déplacement (R2) opposée à la première direction de déplacement (R1), soit guidé dans le canal de passage (26a, 26b, 26c).

12. Procédé selon la revendication 11,
dans lequel la matière pulvérulente déposée sur le plan de support (E) devant l'entraîneur de poudre (16), par rapport au déplacement de l'entraîneur de poudre (16) sur le plan de support (E), est transportée, lors d'un déplacement de l'entraîneur de poudre (16) sur la surface du support (116) dans la première direction de déplacement (R1), dans un puits de collecte (120) et/ou une zone de collecte située en dehors d'une zone critique d'écoulement de gaz.

13. Installation (100) pour la fabrication d'une pièce tridimensionnelle selon un procédé de fabrication additive, qui comprend un dispositif d'application de poudre (10) selon l'une quelconque des revendications 1 à 10.

14. Installation selon la revendication 13,
qui comprend en outre un puits de collecte (120) et/ou une zone de collecte située en dehors d'une zone critique d'écoulement de gaz qui est conçu pour recevoir la matière pulvérulente en provenance de l'entraîneur de poudre (16) lors de son déplacement dans le plan de support (E) dans une première direction de déplacement (R1).

15. Installation selon la revendication 14,
dans laquelle le puits de collecte (120)
- est disposé derrière le support (116) dans la première direction de déplacement (R1) par rapport au déplacement de l'entraîneur de poudre (16) sur le plan de support (E ) et/ou
- est décalé par rapport au support (116) dans la direction (R3) sensiblement perpendiculaire à la première et à la deuxième direction de déplacement (R1, R2) de l'entraîneur de poudre (16) sur le plan de support (E).
